# EUROPÄISCHE PATENTSCHRIFT

(11) **EP 2 020 626 B1**
(45) Veröffentlichungstag und Bekanntmachung des Hinweises auf die Patenterteilung: **06.10.2010**
(21) Anmeldenummer: 07015224.4
(22) Anmeldetag: 02.08.2007
(51) Int. Cl.: G05B 19/409

(54) **Verfahren zur Verwaltung von mobilen Bediengeräten**
Method for managing mobile operator devices
Procédé de gestion d'appareils de commande mobiles

(43) Veröffentlichungstag der Anmeldung: 04.02.2009
(73) Patentinhaber: SIEMENS AKTIENGESELLSCHAFT, 80333 München (DE)
(72) Erfinder: Griessnig, Gerhard, 8010 Graz (AT)

(56) Entgegenhaltungen:
- EP-A- 1 479 964
- EP-A- 1 672 445
- DE-A1- 10 129 189

## Beschreibung

Die Erfindung betrifft ein Verfahren zur Verwaltung von mobilen Bediengeräten, die zur Bedienung mindestens einer Maschine innerhalb eines zugeordneten Wirkbereichs dienen, wobei der Wirkbereich von einem oder mehreren RFID-Transpondern (**R**adio **F**requency **I**dentification) begrenzt wird.

Es ist nicht zulässig, gefahrbringende Aktionen an Maschine/ Anlagen im sicherheitsrelevanten Umfeld von jedem Ort aus durchzuführen. Die Bedienung dieser Anlagen war bisher nur an stationären Punkten oder mit kabelgebundenen Geräten möglich. Diese limitierenden Faktoren sind allerdings durch die Drahtlos-Übertragungstechniken aufgehoben. Um den Anforderungen an die Sicherheitstechnik gerecht zu werden, müssen Bereiche technisch definiert werden und es muss eine eindeutige Zuordnung zu diesen Bereichen stattfinden. Es ist bereits bekannt, entsprechende Wirkbereiche zu definieren, innerhalb derer die Bedienung einer Maschine mittels eines Bediengerätes drahtlos erfolgt. Dabei werden die Wirkbereiche von einem oder mehreren RFID-Transpondern begrenzt. An die Anwendung solcher Bediengeräte im Zusammenhang mit der Funktion der Wirkbereiche werden hohe Anforderungen bezüglich der Sicherheit gestellt.

Durch die Drahtlos-Übertragungstechniken ist es dem jeweiligen Anwender freigestellt, z.B. das entsprechende WLAN-Netz mit dem eingeschalteten Bediengerät zu verlassen bzw. sich frei in diesem zu bewegen. Durch das Verlassen des WLAN-Netzes, aber auch durch kurzzeitige Kommunikationsunterbrechungen, die durch EMV oder andere Störungen eintreten können, können Kommunikationsfehler auftreten, die zum Setzen einer Nothalt-Funktion führen. Dieses "ungewollte" Setzen der Nothalt-Funktion führt in Anlagen zum Teil zu teuren Stehzeiten der Maschinen oder auch zu Zerstörungen von Material bei Fertigungsprozessen. Die Anwender solcher Anlagen sind daher besonders interessiert, dass die Bedienung ihrer Maschinen mit den mobilen Bediengeräten auch in Fehlerzuständen möglichst eine hohe Verfügbarkeit gewährleisten.

Die DE 101 29 189 A1 offenbart eine mobile Bedieneinheit zur Steuerung mehrerer Maschinen. Mit der Bedieneinheit können Maschinen in ihrer lokalen Umgebung mittels bidirektionaler Kommunikation, insbesondere über wenigstens eine drahtlose Netzwerkverbindung gesteuert und bedient werden.

Der Erfindung liegt die Aufgabe zugrunde, ein Verfahren zur Verwaltung von mobilen Bediengeräten der oben genannten Art dahingehend zu verbessern, dass auch im Fall von Kommunikationsfehlern eine hohe Verfügbarkeit der in der Anlage installierten Maschinen erreicht wird.

Die Aufgabe wird durch ein Verfahren mit den Merkmalen gemäß Anspruch 1 gelöst. Dabei ist das oben genannte Verfahren dadurch gekennzeichnet, dass in einer Steuerung für jedes Bediengerät Zustandsinformationen gehalten werden und Nothalt-Ausgänge in Abhängigkeit der Zustandsinformationen des jeweiligen Bediengeräts und der Anmeldung in dem Wirkbereich geschalten werden.

Vorteilhafte Weiterbildungen der Erfindung sind den Unteransprüchen 2 bis 10 zu entnehmen.

Ein Ausführungsbeispiel der Erfindung wird im Folgenden anhand einer Zeichnung näher erläutert. Es zeigen:
- FIG 1: ein System mit einem mobilen, drahtlos kommunizieren- den Bediengerät zum Bedienen von Maschinen in sicher- heitsrelevanten Umfeld und
- FIG 2: eine Tabelle mit der Fehlerbehandlung bei unter- schiedlichen Zustanden.

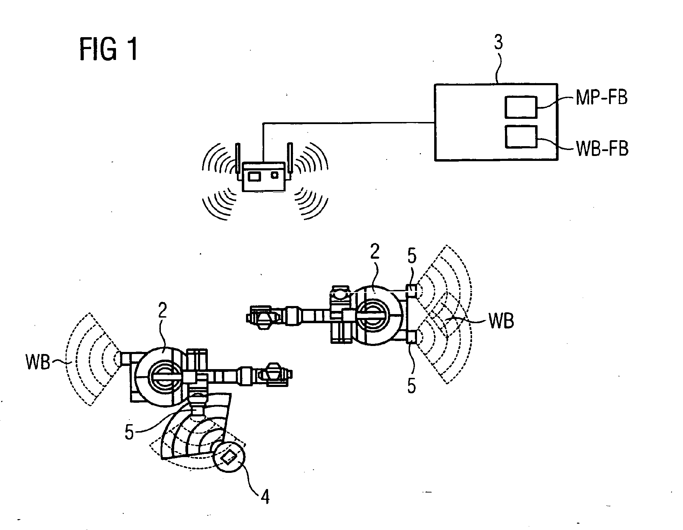

In FIG 1 ist ein System zum Bedienen von Maschinen 2 oder Anlagen dargestellt. Das System weist eine Steuerung 3 und ein mobiles Bediengerät 4 auf, das über Mittel zur drahtlosen Kommunikation, hier speziell eine RFID-Funkverbindung (**R**adio **F**requency **I**dentification), mit der Steuerung 3 verfügt.

Die Bedienung der Maschinen 2 ist nur nach Anmeldung in bestimmten Wirkbereichen WB, die über spezielle RFID-Transponder 5 aufgespannt sind, zulässig. Erst nach einer Anmeldung in diesen Wirkbereichen WB können gefahrbringende Aktionen, z.B. Verfahren von Maschinen, durchgeführt werden. Um den Anforderungen der Sicherheitstechnik gerecht zu werden, müssen Bereiche technisch definiert werden und es muss ein eindeutige Zuordnung zu diesen Bereichen stattfinden. Dementsprechend sind für das System 1 die Wirkbereiche WB definiert, die von einem oder mehreren RFID-Transpondern 5 aufgespannt werden. Dabei ist die räumliche Definition der Wirkbereiche WB durch die Antennencharakteristik der RFID-Transponder 5 sowie durch den projektierbaren maximalen Abstand des mobilen Bediengeräts 4 zu dem betreffenden RFID-Transponder 5 bestimmt.

Das Bediengerät 4 ist mit der Steuerung 3 über eine drahtlose Kommunikationsverbindung, z.B. eine WLAN-Verbindung verbunden, um hierüber Steuerbefehle an die Steuerung 3 zur Bedienung einer Maschine 2 abzusetzen. Hierzu ist Voraussetzung, dass das Bediengerät in die als fehlersicher geltende Steuerung 3 eingegliedert ist, was bedeutet, dass die drahtlose Kommunikationsverbindung aufgebaut ist und eine Nutzdatenübertragung zwischen der Steuerung und dem Bediengerät 4 stattfinden kann.

Nimmt ein Benutzer das Bediengerät 4 in Betrieb, so muss er sicherstellen, dass das Bediengerät 4 ordnungsgemäß arbeitet und in die fehlersichere Steuerung 3 eingegliedert ist. Dies wird dem Benutzer über zwei Wege angezeigt. Eine erfolgreiche Eingliederung wird am Display des Bediengeräts 4 angezeigt, wobei es sich um eine unsichere Nachricht handelt, da sie nicht durch Sicherheitsmaßnahmen überprüft ist. Eine solche Überprüfung mit entsprechenden Sicherheitsmaßnahmen wird mit Hilfe eines Sicherheitsmoduls im Bediengerät durchgeführt und die erfolgreiche Eingliederung dann zum Beispiel über eine Leuchtdiode als sichere Meldung signalisiert. Erst wenn beide Ereignisse eingetreten sind, darf der Benutzer mit dem Bediengerät 4 arbeiten.

Unter einer Ausgliederung wird das gewollte Ausgliedern des Bediengeräts 4 aus der Steuerung 3 verstanden, ohne dabei Seiteneffekte, wie z.B. eine Abschaltung der Maschine 2 gemäß der Vorgabe des Anwenders auszulösen.

Um sicherzustellen, dass der Anwender die richtige Maschine 2 bedient, muss er sich mit dem Bediengerät 4 an den Standort der Maschine 2 begeben. Dies wird mittels eines oder mehrerer RFID-Transponders 5, die den der Maschine zugeordneten Wirkbereich WB aufspannen, überwacht, da sich der Anwender mit dem Bediengerät 4 in diesem Wirkbereich WB befinden muss. Erst nachdem der Anwender in dem Wirkbereich WB angemeldet ist, wird die Steuerung 3 einen an sie übertragenen Steuerbefehl an der betreffenden Maschine 2 ausführen. Die Anmeldung erfolgt nach Empfang gültiger Transponderdaten, d.h. der Identifikationsnummer und des Abstands des jeweiligen RFID-Transponders 5 zum Bediengerät 4. Diese vom Bediengerät 4 nach Empfang der Funksignale des jeweiligen RFID-Transponders 5 ermittelten Daten werden u.a. mit Hilfe eines Sicherheitsmoduls im Bediengerät 4 überprüft. Bei Gültigkeit der Transponderdaten erfolgt in der Steuerung 3 eine Anmeldung im betreffenden Wirkbereich WB und erst dann kommen Steuerbefehle für diesen Wirkbereich WB zugeordneten Maschinen 2 zur Auslösung. Eine Abmeldung aus einem Wirkbereich WB erfolgt, wenn das Bediengerät 4 vom zugehörigen RFID-Transponder 5 keine gültigen Transponderdaten mehr empfängt.

Zum Betrieb und der Bedienung von Maschinen 2 im sicherheitsrelevanten Umfeld ist es erforderlich, im Fehlerfall oder bei unsicheren Zuständen eine Gefährdung durch die Maschine zu vermeiden. Die Verfügbarkeit der Maschinen soll dabei allerdings möglichst hoch gehalten werden, d.h. bei einem Fehler sollen nicht sämtliche Maschinen durch eine NOT-Ausschaltung abgeschaltet werden. Es wird stattdessen angestrebt, je nach Fehlerart nur die betroffenen Maschinen mehr oder weniger schnell abzuschalten oder gesteuert runterzufahren.

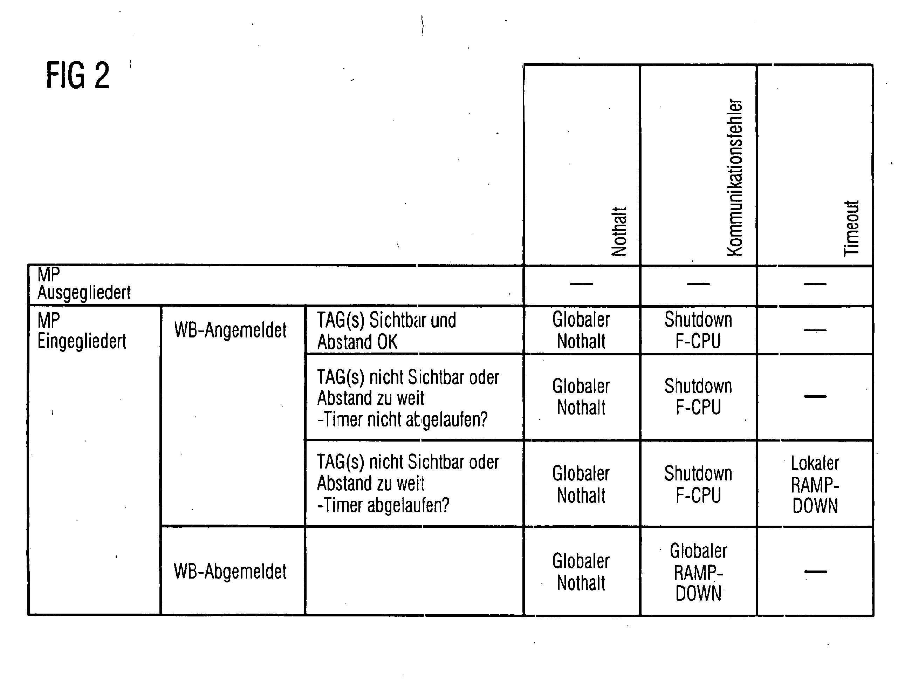

Erfindungsgemäß werden hierzu für die verschiedenen Zustände zugehörige Zustandsinformationen in der Steuerung 3 gesammelt und hiervon abhängig bei Vorliegen eines Fehlerfalls entsprechend reagiert. Die entsprechende Zuordnung der bereits oben beschriebenen Zustandsinformationen wie Eingliederung und Ausgliederung eines Bediengeräts, Anmeldung und Abmeldung in einem Wirkbereich WB zu den verschiedenen Fehlerfällen und hierfür vorgesehene Sicherheitsmaßnahmen sind in der Tabelle gemäß FIG 2 wiedergegeben.

In der Steuerung 3 ist für jedes Bediengerät in der Anlage ein Bediengerät-Funktionsbaustein MP-FB und für jeden Wirkbereich ein zugehöriger Wirbereichs-Funktionsbaustein WB-FB vorgesehen. Im Bediengerät-Funktionsbaustein MP-FB ist festgehalten, ob das betreffende Bediengerät 4 eingegliedert oder ausgegliedert ist. Im Wirkbereichs-Funktionsbaustein WB-FB ist der Zustand der Anmeldung oder Abmeldung des betreffenden Bediengeräts 4 in diesem Wirkbereich WB abgebildet.

Gemäß FIG 2 ist unabhängig von der Anmeldung des Bediengeräts 4 in einem Wirkbereich WB bei Eingliederung in die fehlersichere Steuerung 3 ein globaler Nothalt vorgesehen. Auf allen dem globalen Nothalt zugeordneten Maschinen einer fehlersicheren Steuerung erfolgt ein sofortiges Abschalten. Beim Verlassen der drahtlosen Kommunikationsverbindung, beispielsweise der WLAN-Verbindung, aber auch bei kurzzeitigen Kommunikationsunterbrechungen, d.h. bei einem Kommunikationsfehler, wird anstelle eines globalen Nothalts abhängig davon, ob eine Wirkbereichs-Anmeldung oder eine Wirkbereichs-Abmeldung besteht, reagiert. Tritt der Kommunikationsfehler zwischen dem Bediengerät und der Steuerung 3 während einer Anmeldung in einem Wirkbereich WB auf, wird nur die Maschine im angemeldeten Wirkbereich WB sofort abgeschaltet, was hier mit "shutdown" bezeichnet ist. Auf einen Kommunikationsfehler bei nicht angemeldetem, d.h. abgemeldetem Wirkbereich WB eines Bediengeräts 4 erfolgt eine Abschaltung der z.B. mehreren Wirkbereichen zugeordneten Maschinen nach Vorgabe des Anwenders, was als globaler "ramp-down" bezeichnet wird. Schließlich wird bei unzulässigem Verlassen eines Wirkbereichs WB, was zu nicht gültigen Transponderdaten führt, weil der betreffende RFID-Transponder 5 nicht mehr sichtbar ist oder ein zu großer Abstand besteht, ein Timer gestartet. Bei Ablauf des Timers, was in der FIG 2 mit "timeout" bezeichnet ist, erfolgt eine Abschaltung der dem Wirkbereich WB zugeordneten Maschine 2 nach Vorgabe des Anmelders, was hier mit lokaler "ramp-down" bezeichnet ist.

Durch die nach Fehlerzuständen gestaffelte Abschaltung von Maschinen zum Teil unter Vorgabe des Anwenders, wird eine möglichst hohe Verfügbarkeit im Betrieb bei der Bedienung der Maschinen durch die drahtlos kommunizierenden, mobilen Bediengeräte erreicht.

## Patentansprüche

1. Verfahren zur Verwaltung von drahtlosen Bediengeräten (4), die zur Bedienung mindestens einer Maschine (2) innerhalb eines zugeordneten Wirkbereichs (WB) dienen, wobei der Wirkbereich (WB) von einem oder mehreren RFID-Transpondern (5) begrenzt wird, **dadurch gekennzeichnet, dass** in einer Steuerung (3) für jedes Bediengerät Zustandsinformationen gehalten werden und, dass je nach Fehlerfall in Abhängigkeit der Zustandsinformationen des jeweiligen Bediengeräts (4) und dessen Anmeldung in dem Wirkbereich (WB) die betroffenen Maschinen abgeschaltet werden.

2. Verfahren nach Anspruch 1, **dadurch gekennzeichnet, dass** für jedes Bediengerät (4) ein Bediengerät-Funktionsbaustein (MP-FB) mit den zugehörigen Zustandsinformationen in der Steuerung (3) vorgesehen ist.

3. Verfahren nach Anspruch 1 oder 2, **dadurch gekennzeichnet, dass** für jeden Wirkbereich (WB) ein Wirkbereich-Funktionsbaustein (WB-FB) mit den Nothalt-Ausgängen vorgesehen ist.

4. Verfahren nach einem der vorangehenden Ansprüche, **dadurch gekennzeichnet, dass** eine erste Zustandsinformation angibt, ob das jeweilige Bediengerät (4) in die Steuerung (3) eingegliedert oder ausgegliedert ist, wobei die Eingliederung dann gegeben ist, wenn eine Nutzdatenübertragung zwischen der Steuerung (3) und dem betreffenden Bediengerät (4) stattfindet.

5. Verfahren nach einem der vorangehenden Ansprüche, **dadurch gekennzeichnet, dass** das Bediengerät (4) dem Nutzer die Eingliederung des Bediengeräts (4) signalisiert.

6. Verfahren nach einem der vorangehenden Ansprüche, **dadurch gekennzeichnet, dass** eine zweite Zustandsinformation angibt, ob das betreffende Bediengerät (4) in einem Wirkbereich (WB) angemeldet ist.

7. Verfahren nach einem der vorangehenden Ansprüche, **dadurch gekennzeichnet, dass** bei Auftreten eines Kommunikationsfehlers eines eingegliederten, in einem Wirkbereich (WB) angemeldeten Bediengeräts (4) nur die Maschine (2) im angemeldeten Wirkbereich (WB) sofort abgeschaltet wird.

8. Verfahren nach einem der vorangehenden Ansprüche, **dadurch gekennzeichnet, dass** bei Verlassen eines Wirkbereichs (WB) ohne Abmeldung nach Ablauf eines Timers ein Stoppen der dem Wirkbereich (WB) zugeordneten Maschinen (2) gemäß der Vorgabe des Anwenders erfolgt.

## Claims

1. Method for managing mobile operating devices (4), which are used to operate at least one machine (2) within an assigned active area (WB), with the active area (WB) being restricted by one or several RFID transponders (5), **characterised in that** status information is held in a controller (3) for each operating device and that the relevant machines are stopped depending on the error as a function of the status information of the respective operating device (4) and the logon in the active area (WB).

2. Method according to claim 1, **characterised in that** an operating device function module (MP-FB) with the associated status information is provided in the controller (3) for each operating device (4).

3. Method according to claim 1 or 2, **characterised in that** an active area function module (WB-FB) is provided with the emergency stop outlets for each active area (WB).

4. Method according to one of the preceding claims, **characterised in that** a first status information specifies whether the respective operating device (4) is incorporated in or segregated from the controller (3), with the incorporation then being provided if a payload data transmission takes place between the controller (3) and the relevant operating device (4).

5. Method according to one of the preceding claims, **characterised in that** the operating device (4) signals the incorporation of the operating device (4) to the user.

6. Method according to one of the preceding claims, **characterised in that** a second status information specifies whether the relevant operating device (4) is logged-on in an active area (WB).

7. Method according to one of the preceding claims, **characterised in that** an immediate stopping of the assigned machines (2) is triggered if a communication error of an incorporated operating device (4) logged-on in an active area (WB) occurs.

8. Method according to one of the preceding claims, **characterised in that** a stopping of the machines (2) assigned to the active area (WB) takes place when leaving an active area (WB) without logging off after a duration, in accordance with the specifications of the user.

## Revendications

1. Procédé de gestion d'appareils ( 4 ) de contrôle, sans fil, qui servent à contrôler au moins une machine ( 2 ) dans une plage ( WB ) de travail associée, dans lequel la plage ( WB ) de travail est délimitée par un ou par plusieurs transpondeurs ( 5 ) RFID, **caractérisé en ce que** l'on maintient dans un automate ( 3 ), pour chaque appareil de contrôle, des informations d'état, et **en ce que**, suivant qu'il y a un dérangement, on débranche des machines concernées, en fonction des informations d'état de l'appareil respectif et de son annonce dans la plage ( WB ) de travail.

2. Procédé suivant la revendication 1, **caractérisé en ce que** pour chaque appareil ( 4 ) de contrôle, il est prévu dans l'automate ( 3 ) un module ( MP-FB ) de fonction d'appareil de contrôle ayant les informations d'état associées.

3. Procédé suivant la revendication 1 ou 2, **caractérisé en ce que** pour chaque plage ( WB ) de travail, on prévoit un module ( WB-FB ) de fonction de plage de travail ayant les sorties de maintien d'urgence.

4. Procédé suivant l'une des revendications précédentes, **caractérisé en ce qu'**une première information d'état indique si l'appareil ( 4 ) respectif de contrôle est intégré dans l'automate ( 3 ) ou en est exclu, l'intégration étant donnée lorsqu'une transmission de données utiles entre l'automate ( 3 ) et l'appareil ( 4 ) de contrôle concerné a lieu.

5. Procédé suivant l'une des revendications précédentes, **caractérisé en ce que** l'appareil ( 4 ) de contrôle signale à l'utilisateur l'intégration de l'appareil ( 4 ) de contrôle.

6. Procédé suivant l'une des revendications précédentes, **caractérisé en ce qu'**une deuxième information indique si l'appareil ( 4 ) de contrôle concerné est annoncé dans une plage ( WB ) de travail.

7. Procédé suivant l'une des revendications précédentes, **caractérisé en ce que**, s'il se produit une erreur de communication d'"un appareil ( 4 ) de contrôle intégré et annoncé dans une plage ( WB ) de travail, seule la machine ( 2 ) dans la plage ( WB ) de travail annoncé est débranché immédiatement.

8. Procédé suivant l'une des revendications précédentes, **caractérisé en ce que** lorsque l'on quitte une plage ( WB ) de travail, sans interruption après écoulement d'un temps de minuterie, un arrêt des machines ( 2 ) associées à la plage ( WB ) de travail s'effectue suivant la prescription de l'utilisateur.
